# EUROPÄISCHE PATENTSCHRIFT

(11) **EP 2 732 057 B1**
(45) Veröffentlichungstag und Bekanntmachung des Hinweises auf die Patenterteilung: **28.10.2015**
(21) Anmeldenummer: 12766619.6
(22) Anmeldetag: 17.09.2012
(51) Int. Cl.: C21D 7/02, C21D 9/00, B21K 3/04, F01D 5/00

(54) **VERDICHTERSCHAUFEL UND VERFAHREN ZU IHRER HERSTELLUNG**
COMPRESSOR BLADE AND METHOD FOR THE PRODUCTION THEREOF
AUBE DE COMPRESSEUR ET SON PROCÉDÉ DE FABRICATION

(30) Priorität: 16.09.2011 DE 102011082850
(43) Veröffentlichungstag der Anmeldung: 21.05.2014
(73) Patentinhaber: Siemens Aktiengesellschaft, 80333 München (DE)
(72) Erfinder: BODE, Ralf, 47441 Moers (DE)
(86) Internationale Anmeldenummer: PCT/EP2012/068211
(87) Internationale Veröffentlichungsnummer: WO 2013/037999

(56) Entgegenhaltungen:
- EP-A1- 0 005 439
- EP-A2- 0 976 469
- WO-A1-03/076100
- DE-A1- 3 207 276
- GB-A- 634 583
- JP-A- 62 187 538

## Beschreibung

Die Erfindung betrifft ein Verfahren zur Herstellung einer Verdichterschaufel.

Verdichterschaufeln für Axialverdichter, die atmosphärische Luft ansaugen, sind durch Korrosion gefährdet. Problematisch sind insbesondere die beiden ersten Verdichterstufen, da die in diesem Bereich angesaugte Luft Feuchtigkeit enthalten kann. In den hinteren Verdichterstufen ist die Luft durch die Verdichtung erwärmt und somit trocken. In der Praxis wird daher für Verdichterschaufeln der beiden ersten Reihen ein besonders korrosionsbeständiges Material verwendet. Auf diese Weise sollen Schäden durch Materialermüdung als Folge der Verringerung der Dauerfestigkeit durch Korrosion verhindert werden. In der Regel wird dazu ein Duplexstahl verwendet, der eine niedrige 0,2 %-Dehngrenze aufweist. Derartige Stähle weisen ein zweiphasiges Gefüge auf, das aus einer Ferrit-Matrix mit Inseln aus Austenit besteht. Allerdings beschränkt die niedrige Dehngrenze die zulässige Fliehkraft und dadurch die Drehzahl des Axialverdichters. Die konstruktiven Gestaltungsmöglichkeiten von Verdichterschaufeln werden somit durch die Werkstoffeigenschaften eingeschränkt, insbesondere bei sogenannten Schlossschaufeln.

EP 0 005439 A1 offenbart die Verwendung eines ferritischaustenitischen Cr-Ni-Stahles für geschmiedete Turbinenschaufeln. Die Schrift beschreibt, dass eine Schaufel zerteilt wird und die mechanischen Gütewerte bestimmt werden, die bereits bei zweifachem Verformungsgrad eine Kerbschlagzähigkeit von mehr als 35 Joule bei einer Mindesstreckgrenze von 600 N/mm<2> besitzen müssen.

JP 62187538 A, WO 03/076100 A1 und EP 0 976 469 A2 erwähnen jeweils die Herstellung eines Produkts aus Stahl, wobei die Steigerung der Dehngrenze durch plastisches Verformen des Werkstücks realisierbar ist.

Bei herkömmlichen Axialverdichtern wird die Drehzahl begrenzt, so dass die 0,2 %-Dehngrenze in den Verdichterschaufeln nicht überschritten wird. Nachteilig ist dabei jedoch, dass bei dementsprechend konstruierten Schlossschaufeln hohe Fertigungskosten entstehen. Alternativ wurde bereits vorgeschlagen, für Verdichterschaufeln eine Nickelbasislegierung mit hoher 0,2 %-Dehngrenze und hoher Korrosionsbeständigkeit zu verwenden, allerdings führt eine derartige Nickelbasislegierung zu sehr hohen Kosten und verursacht ein hohes spezifisches Gewicht.

Der Erfindung liegt daher die Aufgabe zugrunde, ein Verfahren zur Herstellung einer Verdichterschaufel anzugeben, das eine kostengünstige Fertigung ermöglicht.

Zur Lösung dieser Aufgabe ist ein Verfahren der eingangs genannten Art mit den folgenden Schritten vorgesehen: Schmieden eines Rohlings aus einem austenitisch-ferritischen Stahl; uniaxiales Recken und plastisches Verformen des Rohlings, während zumindest die Dehnung und die Verformungskraft des Rohlings erfasst und überwacht werden; und Beenden des Reckens nach dem Erreichen eines festgelegten Grenzwerts für die Spannung.

Die Erfindung beruht auf der Erkenntnis, dass durch ein Recken des Rohlings ein Teil der plastischen Verformbarkeit des verwendeten austenitisch-ferritischen Stahls ausgenutzt werden kann, um die 0,2 %-Dehngrenze des Werkstoffs deutlich zu erhöhen. Der austenitisch-ferritische Stahl, der auch als Duplexstahl bezeichnet wird, zeichnet sich durch eine hohe plastische Verformungsfähigkeit auf, seine Bruchdehnung beträgt mindestens 25 %. Demgegenüber wird für die hinteren Stufen des Axialverdichters ein martensitischer Stahl verwendet, dessen Bruchdehnung typischerweise lediglich mindestens 14 % beträgt. Auf diese Weise kann die 0,2 %-Dehngrenze der Rohlinge wesentlich erhöht werden, wobei die Bruchdehnung näherungsweise den gleichen Wert wie in den hinteren Schaufelreihen aufweist. Wesentlich für das erfindungsgemäße Verfahren ist ein gezielte, überwachte Prozessführung, bei der die Rohlinge gesteuert gedehnt werden, wobei die Dehnung und die Verformungskraft, gegebenenfalls auch andere Prozessparameter, erfasst und überwacht werden.

Bei dem erfindungsgemäßen Verfahren wird es bevorzugt, dass als Grenzwert für das Recken des Rohlings eine Spannung vorgesehen wird, die der angestrebten 0,2 %-Dehngrenze entspricht, ohne dass die anschließend noch vorhandene Bruchdehnung unter einen Wert von etwa 14 % abfällt. Dieser Wert ist als Näherungswert zu verstehen, für spezielle Anwendungen kann auch ein niedrigerer oder höherer Grenzwert vorgesehen werden, beispielsweise könnte die Bruchdehnung zwischen 10 % und 20 % liegen.

Um bei dem erfindungsgemäßen Verfahren die gewünschten Werkstoffparameter, insbesondere die 0,2 %-Dehngrenze genau einzustellen, kann es vorgesehen sein, dass die beim Recken des Rohlings aufgewendete Zugkraft und/oder der momentane Querschnitt des Rohlings erfasst wird bzw. werden. Gemäß einer Weiterbildung des erfindungsgemäßen Verfahrens kann die Dehnung gesteuert oder geregelt werden, um den Reckvorgang zu steuern. Dabei wird der momentane Querschnitt des Rohlings, gegebenenfalls auch an mehreren Stellen, gemessen und überwacht, um gegebenenfalls die Zugkraft durch Verringern oder Erhöhen anzupassen. Auf diese Weise wird sichergestellt, dass der Reckvorgang beim Erreichen des festgelegten Grenzwerts für die Spannung beendet wird. Dadurch erreicht man, dass sämtliche Verdichterschaufeln einer Schaufelreihe praktisch identische Materialkennwerte aufweisen, so dass sie sich gleichförmig verhalten. Insbesondere weisen die Verdichterschaufeln eine gleichmäßig erhöhte Dehngrenze RpO,2* auf. Das Recken der Rohlinge führt zu einer Kaltverfestigung, die Rohlinge zeichnen sich anschließend durch eine deutlich höhere Dehngrenze auf, wobei die Zugfestigkeit näherungsweise unverändert bleibt.

Durch die bei dem erfindungsgemäßen Verfahren vorgesehene gezielte, überwachte Prozessführung wird sichergestellt, dass der Querschnitt des Rohlings im Wesentlichen homogen verformt wird.

Im Rahmen des erfindungsgemäßen Verfahrens kann es vorgesehen sein, dass ein Rohling nach dem Recken zerteilt wird, um daraus mehrere Verdichterschaufeln herzustellen. Der Rohling wird anschließend in Form gefräst, um ein gewünschtes Profil herzustellen.

Daneben betrifft die Erfindung eine Verdichterschaufel. Die erfindungsgemäße Verdichterschaufel zeichnet sich dadurch aus, dass sie nach einem Verfahren der beschriebenen Art hergestellt worden ist. Insbesondere ist die erfindungsgemäße Verdichterschaufel aus einem Rohling durch kontrolliertes Recken und plastisches Verformen hergestellt. In den Unteransprüchen sind weitere Ausgestaltungen der Erfindung beschrieben.

Weitere Vorteile und Einzelheiten der Erfindung werden anhand eines Ausführungsbeispiels unter Bezugnahme auf die Zeichnungen erläutert. Die Zeichnungen sind schematische Darstellungen und zeigen:
- Fig. 1: ein Spannung-Dehnung-Diagramm;
- Fig. 2: ein weiteres Spannung-Dehnung-Diagramm;
- Fig. 3: ein weiteres Spannung-Dehnung-Diagramm;
- Fig. 4: einen Rohling für eine Verdichterschaufel vor dem Recken, und
- Fig. 5: den Rohling von Fig. 4 nach dem Recken.

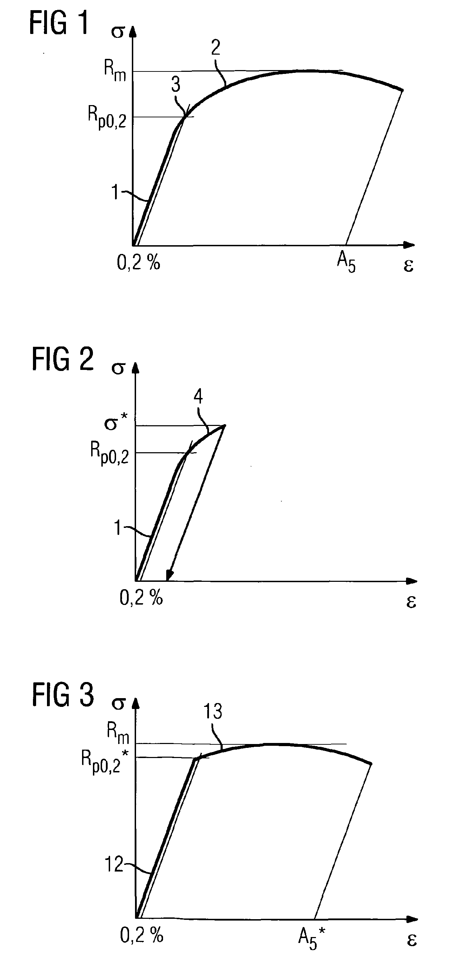

Fig. 1 ist ein Spannung-Dehnung-Diagramm, wobei die Dehnung auf der Abszisse und die Spannung auf der Ordinate aufgetragen ist.

Bei dem Verfahren zur Herstellung einer Verdichterschaufel wird ein austenitisch-ferritischer Stahl verwendet. Dieser nicht rostende Stahl wird auch als Duplexstahl bezeichnet. Zunächst wird aus diesem Stahl ein Rohling geschmiedet. Bei dem Rohling handelt es sich um Vierkant-Stangenmaterial, das später zerteilt wird. Auf diese Weise können aus einem Rohling mehrere Verdichterschaufeln hergestellt werden.

Aus Fig. 1 ergibt sich, dass sich der Stahl bei einer Zugbelastung zunächst linear-elastisch verhält, dieser Bereich ist mit dem Bezugszeichen 1 gekennzeichnet. Daran schließt sich ein plastischer Bereich an, d. h. beim Überschreiten einer bestimmten Dehnung bleibt nach der Entlastung eine plastische Verformung zurück. Als Grenzwert zwischen dem linear-elastischen Bereich 1 und dem plastischen Bereich 2 kann beispielsweise die 0,2 %-Dehngrenze 3 verwendet werden, an diesem Punkt des Spannung-Dehnung-Diagramms weist der Werkstoff eine Dehnung von 0,2 % bezogen auf seinen Ausgangszustand auf. In Fig. 1 erkennt man, dass der verwendete Duplexstahl eine hohe plastische Verformungsfähigkeit aufweist, die Bruchdehnung A₅ beträgt ca. 25 %. Während der plastischen Verformung wird eine maximale Spannung Rₘ erreicht, die die Zugfestigkeit angibt.

Bei dem Verfahren zur Herstellung einer Verdichterschaufel wird von der Tatsache Gebrauch gemacht, dass bei einer plastischen Verformung eine Kaltverfestigung des Materials auftritt. Dazu wird der Verformungsvorgang, insbesondere das Recken, gezielt unterbrochen.

Fig. 2 zeigt ein Spannung-Dehnung-Diagramm, wobei der Rohling zunächst im linear-elastischen Bereich 1 gedehnt wird. Anschließend wird der Anfang 4 des plastischen Bereichs durchlaufen, bis eine bestimmte Dehnung erreicht ist. Beim Erreichen eines festgelegten Grenzwerts für die Spannung wird der Reckvorgang unterbrochen, so dass eine bestimmte bleibende Verformung vorhanden ist.

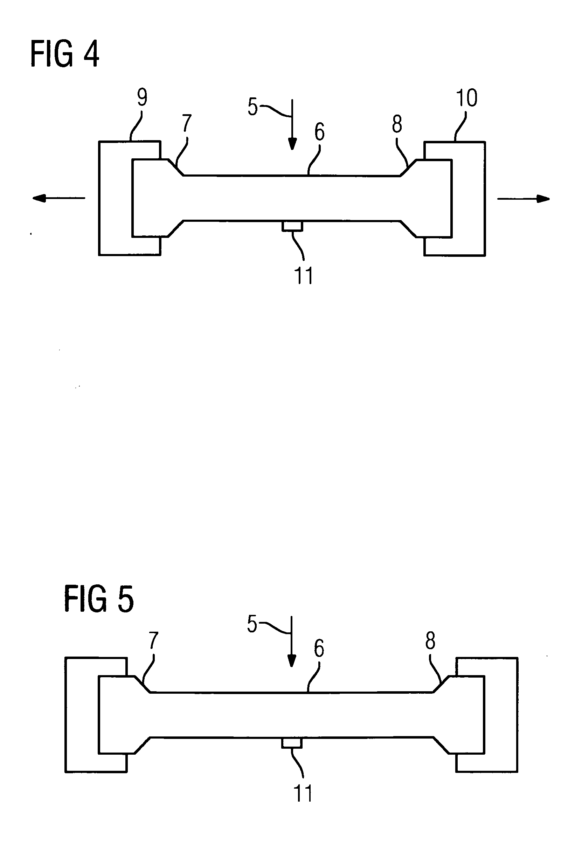

Fig. 4 zeigt schematisch einen Rohling 5, der einen mittleren Bereich 6 sowie Endabschnitte 7, 8 mit einem vergrößerten Durchmesser aufweist. Die Endabschnitte 7, 8 sind in Spannbacken 9, 10 einer Zugmaschine eingespannt. Durch das axiale Verfahren einer der Spannbacken wird auf den Rohling 5 eine homogene uniaxiale Zugkraft ausgeübt. Am Rohling 5 ist ein Messsystem 11 zur Erfassung des tatsächlichen Querschnitts angeordnet. Das Messsystem liefert ein Signal, das zu jedem Zeitpunkt des Reckvorgangs die Größe der tatsächlichen, momentanen Querschnittsfläche des Rohlings 5 liefert. Die tatsächlich herrschende Spannung kann damit anhand der aufgewendeten Zugkraft durch Division durch die tatsächliche Querschnittsfläche jederzeit ermittelt und durch die Dehnung geregelt werden. Der Zug- oder Reckvorgang wird beim Erreichen der festgelegten Spannung beendet. In dem dargestellten Ausführungsbeispiel wird der Reckvorgang beim Erreichen einer Spannung σ* beendet, die deutlich oberhalb von Rp0,2 liegt.

Fig. 5 zeigt den Rohling 5 von Fig. 4 nach dem Ende des Reckvorgangs. Durch die von der Zugmaschine aufgewendete Zugkraft wurde der Rohling 5 plastisch verformt, jedoch nur in seinem mittleren Bereich 6, nicht im Bereich der Endabschnitte 7, 8. Durch die überwachte Prozessführung wurde der gesamte Querschnitt des Rohlings 5 homogen verformt, so dass der in Fig. 5 gezeigte, gereckte Rohling 5 äußerst homogene Eigenschaften aufweist.

Fig. 3 zeigt ein Spannung-Dehnung-Diagramm, das das Verhalten des Rohlings nach dem Recken wiedergibt. Die durch das Recken eingetretene Kaltverfestigung bewirkt, dass die Dehngrenze Rp0,2* erhöht ist im Vergleich zu der entsprechenden Dehngrenze vor dem Recken, die in den Fig. 1 und 2 gezeigt ist. Das bedeutet, dass eine aus einem derartigen Rohling hergestellte Verdichterschaufel im Betrieb eine höhere Spannung ertragen kann, somit kann ein Axialverdichter mit derartigen Verdichterschaufeln mit höherer Drehzahl betrieben werden.

An den linearen Bereich 12 schließt sich ein plastischer Bereich 13 an, wobei die Zugfestigkeit Rₘ unverändert im Vergleich zu dem nicht gereckten Rohling geblieben ist. Die Bruchdehnung A₅* ist lediglich geringfügig reduziert im Vergleich zu der Bruchdehnung A₅ des nicht gereckten Rohlings, die in Fig. 1 dargestellt ist. Die Bruchdehnung A₅* ist um den dem Reckvorgang entsprechenden Wert verringert, aufgrund der insgesamt hohen Bruchdehnung des Duplexstahls ist diese Verringerung jedoch nicht nachteilig.

Nach dem Ende des Reckvorgangs wird der vorgedehnte Rohling in einzelne Segmente zerteilt, die gewünschte Profilkontur der Verdichterschaufel wird durch einen Fräsvorgang erzeugt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung einer Verdichterschaufel, umfassend die folgenden Schritte:
- Schmieden eines Rohlings aus einem austenitisch-ferritischen Stahl;
- uniaxiales Recken und plastisches Verformen des Rohlings, während zumindest die Dehnung und die Verformungskraft des Rohlings erfasst und überwacht werden; und
- Beenden des Reckens nach dem Erreichen eines festgelegten Grenzwerts für die Spannung.

2. Verfahren nach Anspruch 1,
**dadurch gekennzeichnet,**
**dass** als Grenzwert für das Recken des Rohlings die angestrebte 0,2%-Dehngrenze vorgesehen wird.

3. Verfahren nach Anspruch 1 oder 2,
**dadurch gekennzeichnet,**
**dass** die beim Recken des Rohlings aufgewendete Zugkraft und/oder der momentane Querschnitt des Rohlings erfasst wird bzw. werden.

4. Verfahren nach einem der vorangehenden Ansprüche,
**dadurch gekennzeichnet,**
**dass** der Querschnitt des Rohlings im Wesentlichen homogen verformt wird.

5. Verfahren nach einem der vorangehenden Ansprüche,
**dadurch gekennzeichnet,**
**dass** ein Rohling nach dem Recken zerteilt wird, um daraus mehrere Verdichterschaufeln herzustellen.

6. Verfahren nach Anspruch 5,
**dadurch gekennzeichnet,**
**dass** die Rohlinge nach dem Zerteilen überfräst werden, um ein bestimmtes Profil zu erzeugen.

## Claims

1. Method for producing a compressor blade, comprising the following steps:
- forging a blank from an austenitic-ferritic steel;
- uniaxially stretching and plastically deforming the blank, while at least the elongation and the deformation force of the blank are detected and monitored; and
- ending the stretching after a defined limit value for the stress has been reached.

2. Method according to Claim 1,
**characterized**
**in that** the intended 0.2% elongation limit is provided as the limit value for the stretching of the blank.

3. Method according to Claim 1 or 2,
**characterized**
**in that** the tensile force applied during the stretching of the blank and/or the instantaneous cross section of the blank is or are detected.

4. Method according to one of the preceding claims,
**characterized**
**in that** the cross section of the blank is substantially homogeneously deformed.

5. Method according to one of the preceding claims,
**characterized**
**in that** a blank is divided up after the stretching, in order to produce a plurality of compressor blades therefrom.

6. Method according to Claim 5,
**characterized**
**in that** the blanks are face-milled after the division, in order to produce a certain profile.

## Revendications

1. Procédé de fabrication d'une aube de compresseur, comprenant les stades suivantes :
- on forge une ébauche en un acier austénitique-ferritique ;
- on étire uniaxialement et on déforme plastiquement l'ébauche, tout en détectant et en contrôlant au moins l'allongement et la force de déformation de l'ébauche ; et
- on met fin à l'allongement après avoir atteint une valeur limite fixée de la contrainte.

2. Procédé suivant la revendication 1,
**caractérisé en ce que** l'on prévoit comme valeur limite pour l'allongement de l'ébauche la limite élastique 0,2 % visée.

3. Procédé suivant la revendication 1 ou 2,
**caractérisé en ce que** l'on détecte la force de traction appliquée lors de l'allongement de l'ébauche et/ou la section transversale instantanée de l'ébauche.

4. Procédé suivant l'une des revendications précédentes,
**caractérisé en ce que** l'on déforme de manière sensiblement homogène la section transversale de l'ébauche.

5. Procédé suivant l'une des revendications précédentes,
**caractérisé en ce que** l'on subdivise l'ébauche après l'allongement pour en fabriquer plusieurs aubes de compresseur.

6. Procédé suivant la revendication 5,
**caractérisé en ce que** l'on fraise l'ébauche après la subdivision pour produire un profil défini.
